# EUROPÄISCHE PATENTANMELDUNG

(11) **EP 1 424 657 A1**
(43) Veröffentlichungstag der Anmeldung: **02.06.2004**
(21) Anmeldenummer: 02026205.1
(22) Anmeldetag: 26.11.2002
(51) Int. Cl.: G07B 15/00, G07C 9/00

(54) **Elektronisches Ticket**

(71) Anmelder: SkiData AG, 5083 Gartenau (AT)
(72) Erfinder: Ponert, Gregor, A-5020 Salzburg (AT); Aigner, Roland, A-5400 Hallein (AT)
(74) Vertreter: Haft, von Puttkamer, Berngruber, Czybulka

(57) **Zusammenfassung**

In eine mobile Einheit mit einem Mikroprozessor (11), einem Speicher (12) und einer Codier- und Decodiereinrichtung (13) ist über eine Applikationsschnittstelle (19) eine Hardware (4) und eine Software (5) zur Simulation eines elektronischen Tickets für RFID-Systeme zum Datenaustausch mit dem Lesegerät (8) integriert.

## Beschreibung

Die Erfindung bezieht sich auf ein elektronisches Ticket für RFID-Systeme nach dem Oberbegriff des Anspruches 1.

Die bekannten elektronischen Tickets für RFID (Radio Frequency Identification)-Systeme sind Karten mit einem RFID-Transponder, der in einem Wechselfeld mit definierter Frequenz Daten abgeben und empfangen kann, die in einem Speicher auf der Karte abgelegt sind bzw. in diese eingelesen werden können. Der Arbeitsbereich der RFID-Systeme liegt z. B. bei 125 kHz, 13,56 MHz oder im Mikrowellenbereich.

Die Tickets werden zur automatischen Kontrolle der Inanspruchnahme einer Leistung eingesetzt, und zwar bei den unterschiedlichsten Einrichtungen, z. B. Nahverkehrsmittel, Skiliftanlagen, Mietautos, Parkplätze, als Tickets für Großveranstaltungen usw.

Beim Passieren eines Zugangsterminals wird die Berechtigung von dem Lesegerät abgefragt und ggf. eine Abbuchung von dem auf den Datenträger gespeicherten Guthaben vorgenommen. Um das zur Verfügung stehende Kartenguthaben sichtbar zu machen, ist es bekannt, einen Teilbereich der Karte mit einer thermoreversiblen Schicht zu versehen, auf die ein an das Lesegerät angeschlossener Thermodruckkopf das jeweilige Kartenguthaben aufzeichnet (WO 00/16256). Dazu muss die Karte kontaktbehaftet beschriftet werden. Der Vorteil des RFID-Systems, dass der Berechtigungsinhaber das Ticket beim Passieren des Zugangsterminals nur mitzuführen braucht, geht damit verloren.

Zudem werden heutzutage mehr und mehr Multifunktionskarten verwendet. Das heißt, mit einer Karte soll eine Vielzahl verschiedener Berechtigungen in Anspruch genommen werden können. Um die jeweiligen Guthaben, unterschiedlichen Gültigkeitsfristen und dergleichen für die einzelnen Berechtigungen einer solchen Multifunktionskarte sichtbar machen zu können, reicht die Fläche der Karte gar nicht mehr aus.

Aus EP 0327541 B1 ist bereits ein elektronisches Ticket für RFID-Systeme bekannt, das als Armbanduhr ausgebildet ist und ein Display zur Anzeige der Berechtigung aufweist. Die Armbanduhr ist dazu mit einer aufwendigen Elektronik versehen.

Aufgabe der Erfindung ist es, ohne nennenswerte zusätzliche Kosten ein RFID-Ticket bereitzustellen, mit dem die abgespeicherte Berechtigung ohne kontaktbehafteten Vorgang angezeigt werden kann.

Dies wird erfindungsgemäß mit dem im Anspruch 1 gekennzeichneten elektronischen Ticket erreicht. In den Unteransprüchen sind vorteilhafte Ausgestaltungen der Erfindung wiedergegeben.

Nach der Erfindung wird in eine existierende mobile Einheit, die einen Mikroprozessor, einen Speicher, eine Anzeigeeinheit und eine Codier- und Decodiereinrichtung aufweist, eine Software und eine Hardware implementiert, um ein herkömmliches RFID-Ticket zu simulieren. Die Anzeigeeinheit ist dabei vorzugsweise mit einer Tastatur oder dergleichen Bedieneinheit zur Menüführung versehen. Das Benutzerinterface kann als Display oder Lautsprecher ausgeführt sein. Das Benutzerinterface bzw. die Anzeigeeinrichtung kann auch eine sonstige Informationsabgabeeinrichtung sein. So kann die Anzeigeeinheit beispielsweise auch ein optisches Signal (Rot/Grün) oder einen Piepston abgeben.

Die mobile Einheit kann ein Mobiltelefon, ein GPS-Empfänger, beispielsweise eines Fahrzeugnavigationssystems, ein Handheld-PC, ein Pocket-Organiser oder dergleichen Datenendgerät mit ausreichender Rechnerleistung sein. Das heißt, das erfindungsgemäß ausgebildeten Datenendgerät ist über eine transpondertypische Verbindung zum Datenaustausch mit Lesegeräten, beispielsweise an Zutrittsterminals ausgebildet. Vorzugsweise wird ein Mobiltelefon als mobile Einheit eingesetzt, da der größte Teil der Bevölkerung bereits über ein solches Gerät verfügt.

Die Berechtigung kann mit der mobilen Einheit über eine definierte Schnittstelle angezeigt und/oder bearbeitet werden, je nach Anwendungsfall und Berechtigung.

Die Software dient unter anderem der Steuerung, d. h. dem Zusammenspiel der Logik eines RFID-Tickets mit der Bedienlogik der mobilen Einheit. So können mit dem Display und der Menüführung der mobilen Einheit die Informationen über die gespeicherten Berechtigungsdaten angezeigt oder bearbeitet werden.

Durch die SIM-Karte kann bei einem Mobiltelefon ein Missbrauch des Datenträgers durch unberechtigte Personen ausgeschlossen werden. Für den Datenaustausch zwischen der mobilen Einheit und dem Lesegerät können die üblichen Schutzverfahren, wie Verschlüsselung oder Passwort, zur Anwendung kommen.

Die Abrechnung der Berechtigung kann über die Telefonrechnung oder Kreditkarte erfolgen.

Für das Mobilfunknetz stehen bestimmte Frequenzbereiche zur Verfügung, für das GSM-System z. B. 890 - 915 und 935 - 960 MHz. Da für RFID-Systeme andere Frequenzen vorgesehen sind, beispielsweise 125 kHz, 13,56 MHz oder im Mikrowellenbereich, besteht die zusätzliche Hardware, mit der das Datenendgerät erfindungsgemäß versehen wird, aus einer RFID-Antenne in Form einer Antennenspule oder Dipolantenne. Ferner sind als Schnittstelle zur Antenne ein Sender und ein Empfänger erforderlich.

Da Mobiltelefone eine Codier- und Decodiereinrichtung besitzen, kann der Sender und der Empfänger an die Codierund Decodiereinrichtung angeschlossen werden und deshalb außerordentlich einfach aufgebaut sein. So kann der Sender lediglich durch eine Baugruppe zum Bedämpfen der RFID-Frequenz und der Empfänger durch eine Baugruppe zur Signaldetektion im RFID-Frequenzbereich ausgebildet sein. Auch können Sender und Empfänger durch eine Baugruppe zum Bedämpfen der RFID-Frequenz sowie zur Signaldetektion im RFID-Frequenzband gebildet werden. Die Baugruppen werden vorzugsweise durch Chips gebildet. Der Stromverbrauch durch die zusätzliche Hardware ist damit extrem gering, d. h. die Stromversorgungseinrichtung, also z. B. der Akku des Mobiltelefons wird erfindungsgemäß kaum beansprucht.

Das erfindungsgemäße elektronische Ticket kann als Zutrittsticket eingesetzt werden, darüber hinaus aber auch als Berechtigungsnachweis, Zeiterfassungssystem, Bezahlmedium oder dergleichen. Generell bildet das erfindungsgemäße Ticket also ein Datenendgerät für RFID-Systeme.

Um mit dem Mobiltelefon oder dergleichen existierender mobiler Einheit ein elektronisches Ticket zu simulieren, wird erfindungsgemäß die Hardware in dem Mobiltelefon entsprechend ergänzt und die Software entsprechend programmiert. Die Codier- und Decodiereinrichtung des Mobiltelefons wird dazu für RFID-Systeme ausgebildet, in dem sie z. B. über einen Sender und einen Empfänger mit einer RFID-Antenne verbunden wird. In dem Mobiltelefon wird also eine Applikationsschnittstelle vorgesehen, um damit ein Ticket zu simulieren, das wie ein übliches RFID-Ticket gelesen werden kann.

Das erfindungsgemäße Ticket weist vorzugsweise eine Datenschutzeinrichtung, beispielsweise gängige Verschlüsselungssysteme und/oder Zugriffskontrollsysteme auf, wobei je nach dem Informationsgehalt der virtuellen, also der im Ticket abgespeicherten Berechtigung eine Entscheidung hinsichtlich des Datenschutzsicherheitsgrades (z. B. kein Datenschutz, Anzeigeerlaubnis, Löscherlaubnis, usw.) getroffen werden kann.

Die Anzeige, insbesondere Visualisierung der virtuellen Berechtigung kann über die Anzeigeeinheit der mobilen Einheit erfolgen, die ein Benutzerinterface bildet. Die Berechtigung kann stattdessen auch durch eine andere Anzeigeeinheit angezeigt werden. So kann die Berechtigung z. B. durch ein optisches oder akustisches Signal (Rot/Grün oder Piepston) mit einer Ausgabeeinheit angezeigt werden.

In dem Ticket können mehrere, unabhängige Berechtigungen abgespeichert sein. Die Berechtigungen können auch Identifikationsinformationen, Werte oder dergleichen sein.

Der Zugriff auf die virtuelle Berechtigung kann über die Bedieneinheit in Abhängigkeit von dem gewählten Datenschutzsicherheitsgrad erfolgen.

Die Übertragung von Informationen der virtuellen Berechtigung kann entsprechend dem Datenschutzsicherheitsgrad über die jeweilige Schnittstellentechnologie (z. B. GSM, UMTS, irDA, Blue Tooth ®) der jeweiligen mobilen Einheit erfolgen.

Ferner kann die mobile Einheit oder ein mit der mobilen Einheit verbundenes System zur Bestimmung der ortslokalen Position ausgebildet sein, um damit entsprechend dem Datenschutzsicherheitsgrad Einfluss auf den Zugriff auf Berechtigungsdaten (Berechtigungsgültigkeit, Existenz der Berechtigung, usw.) auf dem Ticket nehmen zu können.

Nachstehend ist der erfindungsgemäße Datenträger anhand der Zeichnung am Beispiel eines Mobiltelefons näher erläutert. Darin zeigen:
Figur 1 ein Blockdiagramm eines Mobiltelefons mit integriertem RFID-Ticket; und
Figur 2 ein Blockdiagramm der Hardware des Mobiltelefons nach Figur 1.

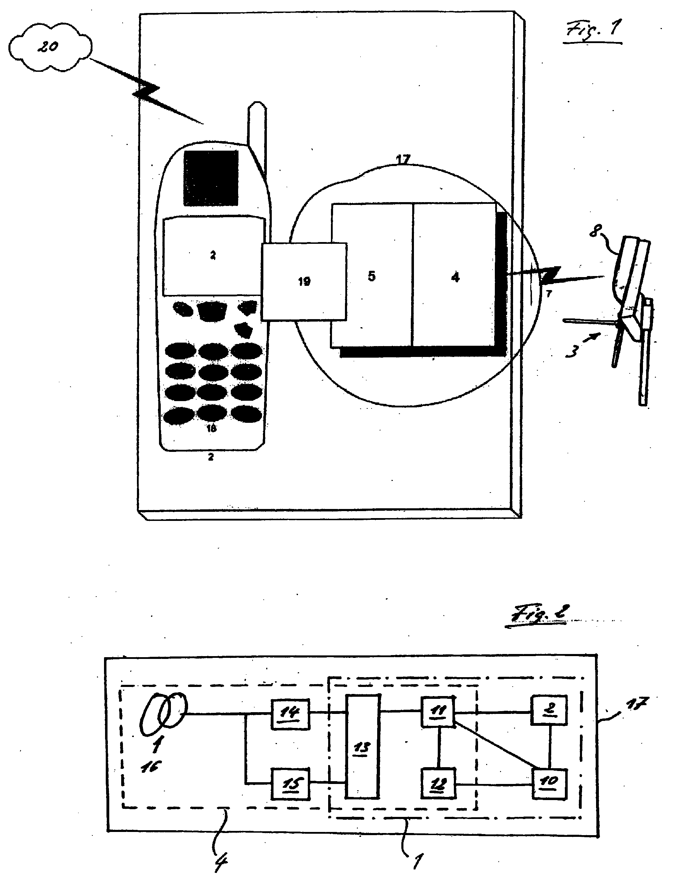

Gemäß Figur 1 wird in ein Mobiltelefon 1 mit einem Display 2 und einer Bedieneinheit 18, z. B. einer Tastatur, eine zusätzliche Hardware 4 und eine Software 5 für ein Zutrittsticket 17 für RFID-Systeme integriert. Die Software 5 dient der Steuerung, also der Verknüpfung der Logik eines RFID-Datenträgers mit der Bedienlogik des Mobiltelefons 1.

Mit 19 ist die Applikationsschnittstelle zwischen dem Mobiltelefon 1 einerseits und der Hardware 4 und der Software 5 andererseits bezeichnet. Die Schnittstelle 19 bietet alle Informationen, die benötigt werden, um ein Ticket anzuzeigen, oder je nach Berechtigung, zu verändern.

Mit 7 ist der Kommunikationsweg zwischen dem Mobiltelefon 1 mit der Hardware 4 und der Software 5 und den Lesegeräten 8 bezeichnet, der den üblichen Verfahren der RFID-Transpondertechnologie folgt. Die Software 5 bildet die Schnittstelle zu dem Mobiltelefon 1 und dem Lesegerät 8, das einem Drehkreuz 3 als Zutrittskontrolleinrichtung zugeordnet ist. Mit 20 ist das Mobilfunknetz bezeichnet.

In Figur 2 ist die Hardware des erfindungsgemäßen Datenträgers 17 mit einer durchgehenden Linie eingerahmt. Die Komponenten des Mobiltelefons sind mit einer strichpunktierten Linie 1 eingerahmt. Das Mobiltelefon 1 weist danach, wie üblich, eine Energieversorgung 10, beispielsweise einen Akku, die Anzeigeeinheit 2, den Mikroprozessor 11 und den Speicher 12 sowie die Codier- und Decodiereinrichtung 13 auf.

Die Hardware des Zutrittstickets ist mit einer gestrichelten Linie 4 eingerahmt. Sie umfasst den Mikroprozessor 11, den Speicher 12 und die Codier- und Decodiereinrichtung 13 des Mobiltelefons 1. Ferner weist sie zusätzlich einen Sender 14 und einen Empfänger 15 auf, die an die Codier- und Decodiereinrichtung 13 angeschlossen sind und die Schnittstelle zu der Antenne 16 des RFID-Tickets 17 bilden.

## Patentansprüche

1. Elektronisches Ticket für RFID-Systeme zum Datenaustausch mit einem Lesegerät (8), **dadurch gekennzeichnet, dass** es durch eine mobile Einheit mit einem Mikroprozessor (11), einem Speicher (12) und einer Codier- und Decodiereinrichtung (13) gebildet wird, in die über eine Applikationsschnittstelle (19) eine Hardware (4) und eine Software (5) zur Simulation eines elektronischen Tickets für RFID-Systeme zum Datenaustausch mit dem Lesegerät (8) integriert ist.

2. Elektronisches Ticket nach Anspruch 1, **dadurch gekennzeichnet, dass** die mobile Einheit eine Bedieneinheit (18) aufweist.

3. Elektronisches Ticket nach Anspruch 1 oder 2, **dadurch gekennzeichnet, dass** die mobile Einheit eine Spannungsversorgung (10) aufweist.

4. Elektronisches Ticket nach einem der vorstehenden Ansprüche, **dadurch gekennzeichnet, dass** die mobile Einheit ein Mobiltelefon (1), GPS-Empfänger, mobiler PC, Taschencomputer oder Uhr ist.

5. Elektronisches Ticket nach einem der vorstehenden Ansprüche, **dadurch gekennzeichnet, dass** die Hardware (4) aus einer RFID-Antenne (16) sowie einem Sender (14) und einem Empfänger (15) als Schnittstelle zur Antenne (16) besteht.

6. Elektronisches Ticket nach Anspruch 5, **dadurch gekennzeichnet, dass** der Sender (14) und der Empfänger (15) an die Codier- und Decodiereinrichtung (13) der mobilen Einheit (1) angeschlossen sind.

7. Elektronisches Ticket nach Anspruch 5 oder 6, **dadurch gekennzeichnet, dass** der Sender (14) durch eine Baugruppe zum Bedämpfen der RFID-Frequenz und der Empfänger (15) durch eine Baugruppe zur Signaldetektion im RFID-Frequenzband gebildet wird.

8. Elektronisches Ticket nach Anspruch 5 oder 6, **dadurch gekennzeichnet, dass** der Sender (14) und der Empfänger (15) durch eine Baugruppe zum Bedämpfen der RFID-Frequenz sowie zur Signaldetektion im RFID-Frequenzband gebildet wird.

9. Elektronisches Ticket nach einem der vorstehenden Ansprüche, **dadurch gekennzeichnet, dass** es eine Datenschutzeinrichtung aufweist, wobei je nach Informationsgehalt der in dem Ticket (17) abgespeicherten Berechtigung eine Entscheidung hinsichtlich des Datenschutzsicherheitsgrades (z. B. kein Datenschutz, Anzeigeerlaubnis oder Löscherlaubnis) getroffen wird.

10. Elektronisches Ticket nach Anspruch 9, **dadurch gekennzeichnet, dass** die Datenschutzeinrichtung ein Verschlüsselungs- oder Zugriffskontrollsystem umfasst.

11. Elektronisches Ticket nach einem der vorstehenden Ansprüche, **dadurch gekennzeichnet, dass** die mobile Einheit eine Anzeigeeinheit (2) aufweist.

12. Elektronisches Ticket nach einem der vorstehenden Ansprüche, **dadurch gekennzeichnet, dass** die im Ticket (17) abgespeicherte Berechtigung durch die Anzeigeeinheit (2) angezeigt oder die Berechtigung über eine Ausgabeeinheit, wie einen Lautsprecher, ausgegeben wird.

13. Elektronisches Ticket nach Anspruch 2, **dadurch gekennzeichnet, dass** der Zugriff auf die im Ticket (17) abgespeicherte Berechtigung über die Bedieneinheit (18) erfolgt.

14. Elektronisches Ticket nach Anspruch 10 und 13, **dadurch gekennzeichnet, dass** der Zugriff auf die im Ticket (17) abgespeicherte Berechtigung entsprechend dem Datenschutzsicherheitsgrad erfolgt.

15. Elektronisches Ticket nach einem der vorstehenden Ansprüche, **dadurch gekennzeichnet, dass** die Übertragung der im Ticket (17) abgespeicherten Berechtigung entsprechend dem Datenschutzsicherheitsgrad über die der Mobileinheit eigene Schnittstellentechnologie (19) (zum Beispiel GSM, UMTS, irDA, Bluetooth) der jeweiligen mobilen Einheit erfolgt.

16. Elektronisches Ticket nach einem der vorstehenden Ansprüche, **dadurch gekennzeichnet, dass** die mobile Einheit oder ein mit der mobilen Einheit verbundenes System zur Bestimmung der ortslokalen Position ausgebildet ist, um den Zugriff auf die Berechtigungsdaten (z. B. Berechtigungsgültigkeit oder Existenz der Berechtigung) auf dem Ticket (17) entsprechend dem Datenschutzsicherheitsgrad zu steuern.

17. Verwendung des elektronischen Tickets nach einem der vorstehenden Ansprüche zur Kontrolle und/oder Überwachung der Berechtigung der Inanspruchnahme einer Leistung, als Zutrittsticket, Berechtigungsnachweis, Zeiterfassungsmedium oder Bezahlmedium.
